## Europäisches Patentamt

## European Patent Office

## Office européen des brevets

(11) Veröffentlichungsnummer: **0 049 386**
**B1**

(12) **EUROPÄISCHE PATENTSCHRIFT**

(45) Veröffentlichungstag der Patentschrift: **24.04.85**

(51) Int. Cl.⁴: **C 01 B 33/28**

(21) Anmeldenummer: **81107283.4**

(22) Anmeldetag: **16.09.81**

(54) Verfahren zur Herstellung eines Zeoliths vom Strukturtyp des Ferrierit.

(30) Priorität: **03.10.80 DE 3037415**

(43) Veröffentlichungstag der Anmeldung:
**14.04.82 Patentblatt 82/15**

(45) Bekanntmachung des Hinweises auf die
Patenterteilung:
**24.04.85 Patentblatt 85/17**

(84) Benannte Vertragsstaaten:
**BE DE FR GB IT NL**

(56) Entgegenhaltungen:
**DE-A-2 507 426**
**DE-A-2 813 969**
**DE-A-2 817 575**
**DE-A-2 830 787**
**US-A-4 016 245**
**US-A-4 146 584**

(73) Patentinhaber: **BASF Aktiengesellschaft**
**Carl-Bosch-Strasse 38**
**D-6700 Ludwigshafen (DE)**

(72) Erfinder: **Marosi, Laszlo, Dr.**
**Leuschnerstrasse 32**
**D-6700 Ludwigshafen (DE)**
Erfinder: **Schwarzmann, Matthias, Dr.**
**Carl-Bosch-Strasse 54**
**D-6703 Limburgerhof (DE)**
Erfinder: **Stabenow, Joachim, Dr.**
**Am Feldrain 22**
**D-6940 Weinheim (DE)**

**Beschreibung**

Die Erfindung betrifft ein Verfahren zur Herstellung eines Zeoliths vom Strukturtype des Ferrierit.

Die gebräuchlichsten Zeolithe des A-, X- und Y-Typs haben eine große technische Bedeutung erlangt. Sie werden als Ionenaustauscher, Molekularsiebe und Katalysatoren verwendet. Technische Verfahren wie das katalytische und hydrierende Cracken von Kohlenwasserstoffen werden mit Zeolithkatalysatoren durchgeführt. Neuerdings gewinnen Zeolithkatalysatoren auch für die Umwandlung von Methanol in Olefine und Aromaten zunehmendes technisches Interesse.

Zeolithe sind kristalline Silikate, insbesondere Aluminosilikate. Aluminosilikatzeolithe sind aus $SiO_4$- und $AlO_4$-Tetraedern aufgebaut. Die Verknüpfung der Tetraeder ist derart, daß im Kristallgitter große Hohlräume entstehen, die neben Kationen auch solche Moleküle aufnehmen können, deren Dimensionen kleiner sind als der Porendurchmesser selbst. Kationen und sorbierte Moleküle sind leicht austauschbar. Darauf beruht die Wirkung der Zeolithe als Ionenaustauscher, Adsorptionsmittel und Molekularsiebe. Ihre katalytische Wirkung in Kohlenwasserstoffumwandlungsreaktionen ist mit dem Vorhandensein von aciden Zentren verknüpft, die z.B. durch Austausch der Kationen gegen Protonen, gegen Cer oder gegen andere mehrwertige Kationen entstehen können.

Es wurden bisher eine große Zahl von Zeolithen synthetisch hergestellt.

Es sind auch Verfahren zur Herstellung von Zeolithen vom Ferrierit-Typ bekannt. Diese Verfahren sind z.B. in der DE—A—25 07 426, US—A—4 016 245 und US—A—4 146 584 beschrieben. Diese Verfahren haben den Nachteil, daß die Synthese in Gegenwart von Alkali durchgeführt wird und die entstandenen Zeolithe größere Mengen an Alkali enthalten. Die Alkaliionen müssen daher, bevor der Zeolith als Katalysator eingesetzt werden kann, gegen andere Ionen ausgetauscht werden. EP—A—41 621 und DE—A—28 307 87 betreffen Verfahren zur alkalifreien Herstellung von Zeolithen mit Hilfe verschiedener Amine. Dabei erhält man Zeolithe vom ZSM-5 Typ. Diese Patentschriften geben aber keine Lehre wie man unter Anwendung bestimmter Amine bei einem bestimmten Mengenverhältnis $SiO_2/Al_2O_3$ zu reinen Ferrieriten gelangen kann.

Es wurde nun gefunden, daß man diese Nachteile bei der Herstellung von Zeolithen vom Ferrierit-Typ durch hydrothermale Kristallisation von Mischungen von $SiO_2$ und $Al(OH)_3$ bei Temperaturen von 80 bis 250°C vermeidet, wenn man die Kristallisation in Abwesenheit von Alkali in einer wäßrigen Lösung von 1,4-Butylendiamin ausführt und in der Reaktionsmischung ein molares Verhältnis von

$SiO_2/Al_2O_3 = 12$ bis 25
$H_2O/Amin = 0,4$ bis 100
$Amin/Al_2O_3 = 5$ bis 400

einstellt.

Erfindungsgemäß erhält man die alkalifreien Zeolithe vom Ferrierit-Typ z.B., indem Mischungen von reaktivem $SiO_2$, z.B. pyrogene Kieselsäure, und $Al(OH)_3$, z.B. frisch gefälltes Aluminiumhydroxid, in einer wäßrigen Lösung von 1,4-Butylendiamin, vorzugsweise unter Eigendruck hydrothermal behandelt bis die Kristallisation eintritt.

Die Kristallisationzeit beträgt je nach Kristallisationstemperatur 0,5 bis 7 Tage bei Temperaturen zwischen 80 bis 250°C insbesondere 100 bis 200°C. Die charakteristischen d-Abstände für den nach dem Verfahren gemäß der Erfindung hergestellten synthetischen Ferrierit sind in der folgenden Tabelle angegeben.

| d (Å) | I/Io |
|-------|------|
| 11,13 | 8 |
| 9,39 | 100 |
| 7,04 | 7 |
| 6,92 | 7 |
| 6,58 | 4 |
| 5,73 | 3 |
| 5,65 | 2 |
| 4,49 | 1 |
| 4,71 | 2 |
| 3,97 | 12 |
| 3,92 | 14 |
| 3,84 | 6 |
| 3,77 | 13 |
| 3,73 | 2 |
| 3,65 | 11 |
| 3,59 | 1 |
| 3,53 | 19 |
| 3,47 | 16 |
| 3,37 | 3 |
| 3,30 | 4 |

Es wurde weiter gefunden, daß das Aluminium im Kristallgerüst des erfindungsgemäßen synthetischen Ferrierits teilweise durch Bor oder andere 3-wertige Elemente wie Eisen oder Gallium ersetzt werden kann, indem man die Synthese in Gegenwart von z.B. Borsäure oder Verbindungen von Eisen oder Gallium durchführt. Der Einbau von Bor in das Kristallgerüst wird durch Verschiebung der d-Werte nach kleineren Werten angezeigt.

Der erfindungsgemäße synthetische Ferrierit eignet sich für die selektive Abtrennung von Kohlenwasserstoffen aus Kohlenwasserstoffgemischen und als Katalysator in zahlreichen Kohlenwasserstoffumwandlungsreaktionen. Zu diesen Verwendungszwecken werden die erfindungsgemäß hergestellten Zeolithe, vorzugsweise durch Kalzinieren bei einer Temperatur von 500 bis 600°C in Luft, aktiviert. Ein anschließender Ionenaustausch ist nicht erforderlich.

Beispiel 1

Es werden mehrere Mischungen von $SiO_2$ und $Al(OH)_3$ in dem unten angegebenen Molverhältnis hergestellt und in 1200 g 50 %iger Aminlösung 7 Tage bei 170°C hydrothermal unter Eigendruck behandelt. Die Zusammensetzung der Reaktionsmischung und das Ergebnis der Versuche ist in der folgenden Tabelle zusammengestellt:

| Amin | Molver-hältnis | Produkt |
|---|---|---|
| 1,4-Butylendiamin | 20 | Ferrierit |
| | 32 | ZSM-5-artig |

Der Nachweis der Kristallstruktur der erhaltenen Produkte erfolgt durch Röntgenbeugungsanalyse.

**Patentansprüche**

1. Verfahren zur Herstellung eines Zeoliths vom Strukturtyp des Ferrierits durch hydrothermale Kristallisation von Mischungen von $SiO_2$ und $Al(OH)_3$ bei Temperaturen von 80 bis 250°C, dadurch gekennzeichnet, daß man die Kristallisation in Abwesenheit von Alkali in einer wäßrigen Lösung von 1,4-Butylendiamin ausführt und in der Reaktionsmischung ein molares Verhältnis von

$$SiO_2/Al_2O_3 = 12 \text{ bis } 25$$

$$H_2O/Amin = 0,4 \text{ bis } 100$$

$$Amin/Al_2O_3 = 5 \text{ bis } 400$$

einstellt.

2. Verfahren nach Anspruch 1, dadurch gekennzeichnet, daß man die Kristallisation unter dem Eigendruck der Lösung ausführt.

3. Verfahren nach Anspruch 1 und 2, dadurch gekennzeichnet, daß man $Al(OH)_3$ teilweise durch geeignete Verbindungen von Bor, Eisen oder Gallium ersetzt.

**Revendications**

1. Procédé pour la préparation d'une zéolite de la structure-type de la ferriérite par cristallisation hydrothermique de mélanges de $SiO_2$ et d'$Al(OH)_3$ à des températures de 80 à 250°C, caractérisé en ce qu'on mène la cristallisation en l'absence d'alcali dans une solution aqueuse de 1,4-butylène-diamine et on règle dans le mélange réactionnel un rapport molaire de

$$SiO_2/Al_2O_3 = 12 \text{ à } 25$$

$$H_2O/amine = 0,4 \text{ à } 100$$

$$amine/Al_2O_3 = 5 \text{ à } 400.$$

2. Procédé selon la revendication 1, caractérisé en ce qu'on mène la cristallisation sous la pression propre de la solution.

3. Procédé selon la revendication 1 ou 2, caractérisé en ce qu'on remplace partiellement $Al(OH)_3$ par des composés appropriés du bore, du fer ou du gallium.

**Claims**

1. A process for the production of a zeolite of the ferrierite-type structure by hydrothermal crystallization of mixtures of $SiO_2$ and $Al(OH)_3$ at a temperature of from 80 to 250°C, wherein the crystallization is carried out in the absence of alkali in an aqueous solution of 1,4-butylene-diamine, and a molar ratio of

$$SiO_2/Al_2O_3 = 12 \text{ to } 25$$

$$H_2O/amine = 0.4 \text{ to } 100$$

$$amine/Al_2O_3 = 5 \text{ to } 400$$

is set up in the reaction mixture.

2. A process as claimed in claim 1, wherein the crystallization is carried out under the autogenous pressure of the solution.

3. A process as claimed in claims 1 and 2, wherein $Al(OH)_3$ is partially replaced by appropriate boron, iron or gallium compounds.